(19) **Europäisches Patentamt**
**European Patent Office**
**Office européen des brevets**

(11) **EP 4 220 497 A1**

(12) **EUROPEAN PATENT APPLICATION**

(43) Date of publication:
**02.08.2023  Bulletin 2023/31**

(21) Application number: **23151451.4**

(22) Date of filing: **13.01.2023**

(51) International Patent Classification (IPC):
**G06N 10/60** $^{(2022.01)}$

(52) Cooperative Patent Classification (CPC):
**G06N 10/60; G01S 13/726; G06N 5/01;**
**G06N 10/40**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.01.2022  IL 29022422**

(71) Applicant: **Elta Systems Ltd.**
**7710201 Ashdod (IL)**

(72) Inventors:
• **MASKIL, Nissan**
**4634415 Hertzliya (IL)**
• **RAVE, Eran**
**4537203 Hod Hasharon (IL)**

(74) Representative: **Zacco GmbH**
**Bayerstrasse 83**
**80335 München (DE)**

(54) **QUANTUM TRACKING METHOD AND APPARATUS**

(57)     The present disclosure provides a hybrid quantum/classical computer implemented method useful in tracking one or more targets in a field of view. The method comprises: receiving positioning data and or not doppler data from a sensing system scanning a field of view containing one or more targets over successive sensing times $(t_0, ...t_k)$ thereby collecting over time a batch $(B_k)$ of scans $(S_1,...,S_k)$ of sensed plots. The method further comprises, for a current batch $(B_k)$ of scans $(S_1,...,S_k)$ of sensed plots: processing a graph $(G)$ containing said sensed plots as vertices $(V)$ and possible connections between pairs of plots associated with consecutive scans as edges $(E)$; associating a binary variable to each edge of the graph $(G)$; processing a cost function of the binary variables so as to favor geometrically relevant edge patterns for the targets being tracked; optimizing said cost function using a quantum processing system by determining the ground state of a Hamiltonian encoding the solutions of said cost function in its eigenvalues; and processing one or more tracks between plots of successive scans when said plots belong to an edge associated with a binary variable solving said optimization.

**Description**

**TECHNOLOGICAL FIELD**

The present disclosure relates to the field of detection and more specifically to the field of target tracking.

**BACKGROUND**

Target tracking is a common issue for detection systems to interpret the environment. Typical sensor systems, such as radar, infrared (IR), lidar, camera or sonar, report measurements from diverse sources: targets of interest, physical background objects such as clutter, or internal error sources such as thermal noise.

A target tracking objective is to collect sensor data from a field of view (FOV) containing one or more potential targets of interest and to then partition the sensor data into sets of observations (also referred to as tracks) that are produced by the same object (also referred to as target). Multiple hypothesis tracking (MHT) is a method for solving the data association problem in multiple targets tracking.

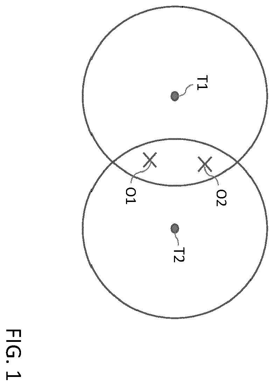

Traditionally, assuming that tracks have been formed from previous data and a new set of input observations becomes available, the input observations are considered for inclusion in existing tracks and for initiation of new tracks. First, a gate, based upon the maximum acceptable measurement plus tracking prediction error magnitudes, can be placed around the predicted track. Only those observations that are within the track gate are further considered for update of the track. As shown in **Fig. 1,** when closely spaced targets **T1, T2** produce closely spaced observations there may be conflicts such that there may be multiple observations within a track's gate and an observation may be within the gates of multiple tracks such.

MHT is a logic in which alternative data association hypotheses are formed whenever observation-to-track conflict situations, such as shown in **Fig. 1,** occur.

Traditional methods for MHT are described by Samuel S. Blackman in Multiple Hypothesis Tracking for Multiple Target Tracking, IEEE A&E Systems Magazine, Vol. 19, No. 1, January 2004, pages 5-18.

**GENERAL DESCRIPTION**

The present disclosure provides a hybrid quantum/classical computer implemented method useful in tracking one or more targets in a field of view. The method comprises: receiving, from a sensing system scanning a field of view, data indicative of a position of one or more targets over successive sensing times ($t_0$, ... $t_k$) thereby collecting over time a batch ($B_k$) of scans ($S_1$,...,$S_k$) of sensed plots. The data indicative of a position may for example include positioning data and optionally doppler data. The positioning data may include a target direction and a target range. The doppler data may include a frequency shift between a signal transmitted by the sensing system and a signal received by the sensing system. The frequency shift may enable to derive a target velocity. The method further comprises, for a current batch ($B_k$) of scans ($S_1$,...,$S_k$) of sensed plots: processing a graph (G) containing said sensed plots as vertices (V) and possible connections between pairs of plots associated with consecutive scans as edges (E); associating a binary variable to each edge of the graph (G); processing a cost function of the binary variables so as to favor geometrically relevant edge patterns for the targets being tracked; optimizing said cost function using a quantum processing system by determining the ground state of a Hamiltonian encoding the solutions of said cost function (energy value) in its eigenvalues; and processing one or more tracks between plots of successive scans when said plots belong to an edge associated with a binary variable solving said optimization.

In some embodiments, the step of optimizing the cost function by determining the ground state of a Hamiltonian includes repeatedly running a variational circuit approximating the ground state of the Hamiltonian representing said cost function.

In some embodiments, the variational quantum algorithm is the Variational Quantum Eigensolver (VQE) or the Quantum Approximation Optimization Algorithm (QAOA).

In some embodiments, the method further comprises connecting tracks defined in optimizing the cost functions of the current batch and of a preceding batch by using a sliding routine.

In some embodiments, the positioning data comprises ranging data derived from a sensing system such as a radar, lidar, camera or other sensor.

In some embodiments, the graph (G) further contains possible connections between pairs of plots associated with successive scans which are non-consecutive.

In some embodiments, processing of the graph further comprises defining for each edge a tail vertex belonging to a given scan and a head vertex belonging to a subsequent scan and wherein the cost function is defined as a quadratic unconstrained binary cost function of the binary variables, wherein: coefficient variables of quadratic terms associated with binary variables of first and second edges such that the head vertex of the first edge coincides with the tail vertex of the second edge are a predetermined decreasing function of an angle formed between said first and second edges; coefficient variables of quadratic terms associated with binary variables of first and second edges sharing a common tail vertex or a common head vertex are set as penalties. The other coefficients may be equal to zero.

In some embodiments, optimizing said quadratic unconstrained binary cost function comprises: constructing a Hamiltonian encoding the quadratic unconstrained binary cost function in eigenvalues of said Hamiltonian by mapping the binary variables onto eigenvalues of Pauli X matrix convert it using Ising model to Pauli Z matrix; and determining at least one of the lowest energy eigenstate of said Hamiltonian using a quantum algorithm.

In some embodiments, said predetermined decreasing function F of the angle formed between said first and second edges is defined as a cosinus function $P(\theta)=-\cos\boxed{f()}(\theta)$.

In some embodiments, said predetermined decreasing function F of the angle formed between said first and second edges is defined as a Heaviside step function $P(\theta)=1$, $\theta<90°$ and $-1$, $\theta\geq90°$.

In some embodiments, said predetermined decreasing function F of the angle formed between said first and second edges is defined as a rectangular function, a sign function or a trigonometric function.

The present disclosure also provides a system useful for tracking one or more targets in a field of view. The system comprises a classical computing system coupled to a quantum computing system, wherein the classical processing system is configured for: receiving from a sensing system data indicative of a position of one or more targets within a field of view of said sensing system over successive sensing times $(t_0, ...t_k)$ thereby collecting a current batch $(B_k)$ of scans $(S_1,...,S_k)$ of sensed plots; and for said current batch $(B_k)$ of scans $(S_1,...,S_k)$ of sensed plots: processing a graph $(G)$ containing said sensed plots as vertices $(V)$ and possible connections between pairs of plots associated with consecutive scans as edges $(E)$; associating a binary variable to each edge of the graph $(G)$; processing a cost function of the binary variables so as to favor geometrically relevant edge patterns; computing a Hamiltonian encoding the cost function values in eigenvalues of said Hamiltonian. The quantum processing system is configured for determining the ground state of the Hamiltonian by implementing a quantum algorithm. The classical computing system is further configured for processing one or more tracks between plots of successive scans when said plots belong to an edge associated with a binary variable belonging to the eigenstate associated with said at least one lowest eigenvalue.

In some embodiments, the system is further configured for connecting tracks defined in optimizing the cost functions of the current batch and of a preceding batch by using a sliding routine.

In some embodiments, the system further comprises the sensing system.

The present disclosure also provides a computer program product facilitating tracking of one or more targets in a field of view of a sensing system comprising computer readable storage medium having program instructions embodied therewith, the program instructions executable by a classical processing system and a quantum processing system coupled therewith to: receive, using the classical computing system, positioning data and/or doppler data from a sensing system scanning a field of view containing one or more targets over successive sensing times $(t_0, ...t_k)$ thereby collecting over time a batch $(B_k)$ of scans $(S_1,...,S_k)$ of sensed plots; using the classical computing system, for a current batch $(B_k)$ of scans $(S_1,...,S_k)$ of sensed plots: processing a graph $(G)$ containing said sensed plots as vertices $(V)$ and possible connections between pairs of plots associated with consecutive scans as edges $(E)$; associating a binary variable to each edge of the graph $(G)$; processing a cost function of the binary variables so as to favor geometrically relevant edge patterns; using the quantum computing system, implementing a variational quantum circuit for optimizing said cost function by determining the ground state of a Hamiltonian encoding the solutions of said cost function in its eigenvalues; using the classical processing system, processing one or more tracks between plots of successive scans when said plots belong to an edge associated with a binary variable solving said optimization.

In another aspect, the present disclosure also provides a hybrid quantum/classical computer implemented method useful in tracking one or more targets in a field of view and associated system and computer program product. The method comprises: receiving, from a sensing system scanning a field of view, data indicative of a position of one or more targets over successive sensing times $(t_0, ...t_k)$ thereby collecting over time a batch $(B_k)$ of scans $(S_1,...,S_k)$ of sensed plots. The data indicative of a position may for example include positioning data and optionally doppler data. The positioning data may include a target direction and a target range. The doppler data may include a frequency shift between a signal transmitted by the sensing system and a signal received by the sensing system. The frequency shift may enable to derive a target velocity. The method further comprises, for a current batch $(B_k)$ of scans $(S_1,...,S_k)$ of sensed plots: processing a graph $(G)$ containing said sensed plots as vertices $(V)$ and possible connections between pairs of plots associated with consecutive scans as edges $(E)$; associating a binary variable to each edge of the graph $(G)$; processing a cost function of the binary variables so as to favor geometrically relevant edge patterns for the targets being tracked; optimizing said cost function using a quantum processing system by determining the ground state of a Hamiltonian encoding the solutions of said cost function (energy value) in its eigenvalues; and processing one or more tracks between plots of successive scans based on said solutions.

In the present disclosure, the following terms and their derivatives may be understood in light of the below explanations:

As used herein, a radar scan may refer to a set of detections (also referred to as plots) as provided by a radar beam at a given time. Some of the sensed plots could possibly be targets. In general, scans can be received at regular intervals of time, or they can occur irregularly in time. In the following, the term scan refers to any set of detections that were produced at the same time. However, the detections can result from real targets or false alarms (e.g., clutter, system noise).

As used herein, a radar track may refer to a set of associated observations that represents the current state estimate (e.g. two dimensional (2D) or three dimensional (3D) positioning data with or without doppler measurements) of a single target's location. The state estimate may include quantities such as the location and velocity or possibly acceleration of the target track. As used herein, a radar tracker may refer to a system configured to process batches received from the radar system and to determine temporal sequences of plots belonging to the same target. When several targets are present, the radar tracker may be configured to determine one track for each target. In some embodiments, the radar tracker may additionally reject any detections believed to be false alarms. In some embodiments, the radar tracker may be able to use the sequence of detections over time to not only obtain a smoothed estimate of the current position, but also a current smoothed velocity state of the target.

As used herein, the term "quantum computing" may refer to the use of quantum-mechanical phenomena to perform computing and information processing functions. Quantum computing can be viewed in contrast to classical computing, which generally operates on binary values with transistors. Quantum computers, on the other hand, operate on quantum bits (qubits) that comprise superpositions of both 0 and 1, can entangle multiple quantum bits, and use interference. For example, superconducting qubits offer a promising path toward constructing fully-operational quantum computers as it can exhibit quantum-mechanical behavior (allowing to be used for quantum information processing) at a macroscopic level (e.g., allowing to be designed and fabricated by existing integrated circuit technologies). A quantum computer uses a qubit as its essential unit instead of a classical computing bit. The qubit is the quantum-mechanical analogue of the classical bit. Whereas classical bits can take on only one of two basis states (e.g., 0 or 1), qubits can take on superpositions of these basis states (e.g., $\alpha|0\rangle + \beta|1\rangle$, where $\alpha$ and $\beta$ are complex scalars such that $|\alpha|^2+|\beta|^2=1$), allowing a number of qubits to theoretically hold exponentially more information than the same number of classical bits. Thus, quantum computers (e.g., computers that employ qubits instead of solely classical bits) can, in theory, quickly solve some problems that may be extremely difficult for classical computers.

As used herein, the term "Quadratic Unconstrained Binary Optimization" (QUBO) may refer to a discrete optimization problem that involves finding a set of N binary variables $\{x_i\}$ that minimizes an objective function of the form:

$$E(x_1, \ldots x_N) = \sum_{i,j=1}^{N} q_{ij} x_i x_j$$

where $q_{ij}$ are the elements of a matrix Q which is typically a real-valued upper triangular matrix that is characteristic of the particular problem instance being studied. The QUBO model has gained prominence in recent years with the discovery that it unifies a rich variety of combinatorial optimization problems.

As used herein, a Hamiltonian $H_f$ may be referred to as representing a function $f$ acting on n binary variables if it satisfies:

$$H_f|x\rangle = f(x)|x\rangle$$

For each input string $x \in \{0,1\}^n$ with corresponding computational basis state $|x\rangle$. In other words, the Hamiltonian $H_f$ encodes the values of f in its eigenvalues.

As used herein, the term quantum algorithm may include hybrid classical/quantum algorithm in which a part of the algorithm steps is performed on a classical computing system and a part of the algorithm steps is performed on a quantum computing system.

As used herein, the term "consecutive" when used with respect to a temporal sequence of items $(l_1 \ldots l_n)$ may refer to directly successive items i.e. immediately following each other in the temporal sequence such as $l_k$ and $l_{k+1}$ while the term "successive" may refer to items following each other where one or more items may separate said successive items such as $l_{k+1}$ and $l_{k+j}$, with j>1.

**BRIEF DESCRIPTION OF THE DRAWINGS**

In order to better understand the subject matter that is disclosed herein and to exemplify how it may be carried out in practice, embodiments will now be described, by way of non-limiting example only, with reference to the accompanying drawings, in which:

> **Fig. 1** illustrates an exemplary situation with several targets and several detections observed within track gates of said targets;
> **Fig. 2** illustrates a radar system according to embodiments of the present disclosure;
> **Fig. 3** illustrates a method according to some embodiments of the present disclosure;
> **Fig. 4** is a schematic illustration of a batch of scans (plots) according to some embodiments of the present disclosure;
> **Fig. 5** is a schematic illustration of a Variational Quantum Eigensolver (VQE) for implementing a variational quantum algorithm according to some embodiments of the present disclosure.

## DETAILED DESCRIPTION OF EMBODIMENTS

Some examples of applications and improved technologies using the disclosed invention include self-driving cars that need to be aware of other cars and surroundings, aircraft flying through high traffic environment and any other navigation technology or application that tracks an object using a radar sensor.

The present disclosure provides a method and system useful for tracking one or more targets in a field of view. Generally, the present disclosure proposes to describe a multi hypothesis target (MHT) problem with a new set of variables and a new objective function in a form of quadratic polynomial. The new formulation is particularly adapted to be solved on a quantum computer. In the traditional algorithmic framework for solving the MHT problem, the variables are chosen to represent assignments of plots to specific tracks. In the new proposed formulation, the binary variables may represent the existence of specific flight segments between two successive plots.

Generally, the method disclosed herein comprises translating the MHT problem into an optimization of an objective function of binary variables. The method includes a preprocessing comprising defining a graph containing the sensed plot as a vertex and possible connections between pairs of plots as edges. The method may further associate said connections between plots with binary variables and the cost function may be defined so as to favor geometrically relevant series of connections. The geometrical relevance of the series of connections may depend on the type of targets being tracked. The presently disclosed method may be particularly useful for tracking targets having a continuous movement such as terrestrial, aerial or naval vehicles. For example, certain type of series of connections may be penalized and/or a weight of series of connections in the cost function may be dependent on a geometrical shape of said series of connections. In particular, series of connections having a linear pattern (shape) may be favored relative to series of connections showing a curved pattern. Series of connections having a smooth pattern may be favored relative to series of connections having an irregular pattern. A series of connections may appear in the cost function as a product of the binary variables associated with said connections. The cost function may be mapped to a Hamiltonian and the optimization of the cost function is performed using a quantum algorithm.

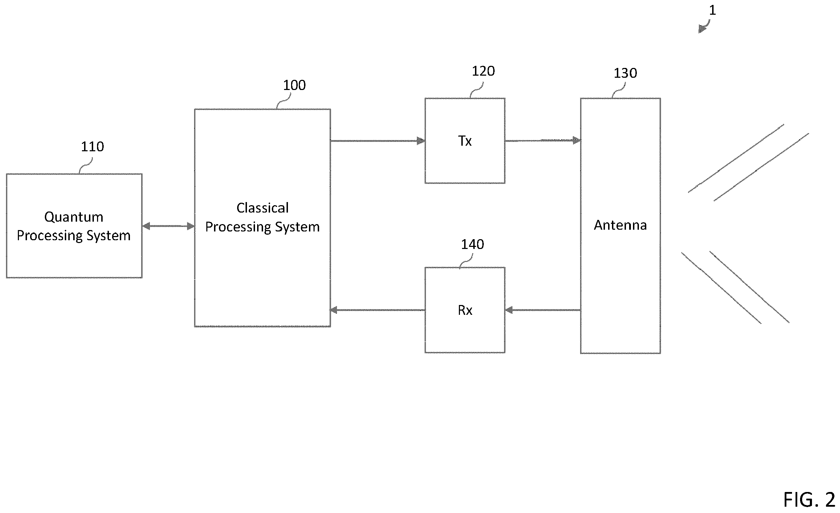

**Fig. 2** is an exemplary block diagram of a radar system **1** configured to implement the method useful for tracking targets according to some embodiments of the present disclosure. As shown, the radar system **1** includes a classical processing system **100** (e.g. for implementing a pre-processing according to embodiments of the present disclosure) coupled to a quantum processing system **110**. The classical processing system **100** is coupled to transmit circuitry **120** and to the receive circuitry **140.** The transmit circuitry **120** and the receive circuitry **140** are each coupled to a radar antenna **130.**

The classical processing system **100** may for example include a graph processing component tracking component coupled to a cost function component. One skilled in the art would recognize that the graph processing component and cost function component may be implemented as separate circuitries, or be fully or partially combined in a processor with memory, I/O circuitry, firmware and software, such as a processor of the classical processing system.

Radar transmitter **120** may be configured to transmit power (e.g, selected waveforms provided by the processor **100)** and receiver **110** may be configured to receive returning signal from true targets as well as extraneous returns such as clutter (e.g., false targets). The returning signal may be sent to a signal processing component of the classical processor **100** (also referred to as signal processor). The signal processor may then analyze the data in the returning signal to determine the location of potential targets. The set of potential target locations (also referred to as sensed plots) may be sent to the graph processing component of the classical processor **100** for further processing as further described hereinbelow.

The quantum processing system **110** may include a gate model quantum processor such as a superconducting, ions, cold atoms, NVC (nitrogen vacancy center) or optics-based quantum processor or an annealing quantum processor.

Classical and quantum processing systems **100** and **110** can optionally include a server device, one or more networks and one or more devices (not shown). The classical processing system **100** can also include or otherwise be associated with at least one classical processor that executes computer executable components stored in a memory. The classical processing system **100** includes a memory configured to store computer executable components executable by the classical processor on a classical computer. The classical processing system **100** can further include a system bus configured to couple various components including, but not limited to, a signal processing component, a graph processing component and a cost function component, other components useful for implementing the method described hereinbelow, a transmission component configured to transmit data to the quantum processor indicative of a cost function for solving an optimization problem; and a presentation component configured to receive from the quantum processor respective solutions and presents a set of optimized solutions.

The quantum processing system **110** may include or otherwise be associated with at least one quantum processor configured to execute computer executable components stored in a memory of the quantum processing system. The quantum processing system **110** includes a memory configured to store computer executable components executable by the quantum processor.

The quantum processing system **110** can further include a system bus configured to couple various components including, but not limited to, a receiving component configured to receive data from a classical computer indicative of the cost function for solving the optimization problem; a computing component configured to perform a quantum algorithm for example a variational quantum eigensolver (VQE) algorithm or a quantum approximate optimization algorithm (QAOA); and a transmission component configured to transmit to the classical computer respective solutions.

Classical processing system **100** can be any suitable computing device or set of computing devices that can be communicatively coupled to devices, non-limiting examples of which can include, but are not limited to, a server computer, a computer, a mobile computer, a mainframe computer, an automated testing system, a network storage device, a communication device, a web server device, a network switching device, a network routing device, a gateway device, a network hub device, a network bridge device, a control system, or any other suitable computing device. A device can be any device that can communicate information with the systems **100** or **110** and/or any other suitable device that can employ information provided by system **100** or **110**. It is to be appreciated that systems **100** and **110,** components, models or devices can be equipped with communication components (not shown) that enable communication between the system, components, models, devices, etc. over one or more networks.

The various components of systems **100** or **110** can be connected either directly or via one or more networks. Such networks can include wired and wireless networks, including, but not limited to, a cellular network, a wide area network (WAN) (e.g., the Internet), or a local area network (LAN), non-limiting examples of which include cellular, WAN, wireless fidelity (Wi-Fi), Wi-Max, WLAN, radio communication, microwave communication, satellite communication, optical communication, sonic communication, or any other suitable communication technology. Moreover, the aforementioned systems and/or devices have been described with respect to interaction between several components. It may be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components can be combined into a single component providing aggregate functionality. The components can also interact with one or more other components not specifically described herein for the sake of brevity, but known by those of skill in the art.

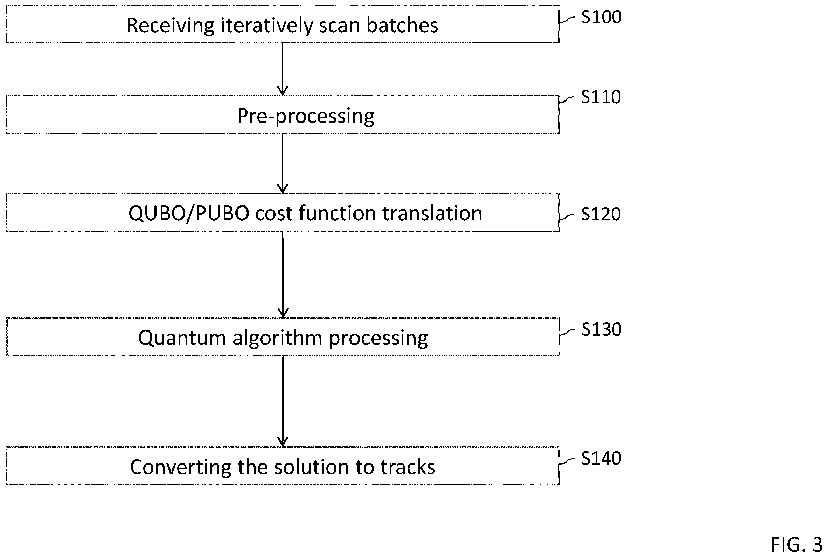

**Fig. 3** illustrates generally a method according to the present disclosure implemented for example on the classical and quantum processing systems described with reference to **Fig. 2.** The method may be useful in tracking one or more targets in a field of view of a sensing system.

In a first step **S100,** scans of sensed plots may be repeatedly received over time from a sensing system scanning a given field of view which may contain one or more targets. For example, the scanning system may be the radar system described with reference to **Fig. 2** or another type of system configured to determine positioning data or and or not doppler data of objects over a field of view such as a lidar system, a sonar, a camera or the like. Each scan ($S_i$) may be associated with a sensing time ($t_i$) and a group of scans ($S_1,...,S_k$) collected until sensing time ($t_k$) may collectively form a batch ($B_k$).

In a second step **S110,** a pre-processing of a batch may be performed. The pre-processing step may for example be implemented on a classical processing system, for example the classical processing system **100** of the radar system described in **Fig. 2.** The pre-processing may comprise defining a graph (G) based on a current batch $B_k$. The segment graph may contain each sensed plot as a vertex (V) and each possible connections between pairs of plots associated with consecutive scans as an edge (E). Each edge may include a tail vertex belonging to a given scan and a head vertex belonging to a successive scan. In some embodiments, the segment graph may additionally comprise possible connections between pairs of plots associated with successive batches which are non-consecutive. This enables to allow misdetections to be taken into consideration. A number of time steps between successive batches which are non-consecutive may be predetermined by a user. This enables the algorithm to use less qubits.

In a third step **S120,** the MHT problem of finding which temporal sequences of plots belonging to the same target may be translated into an optimization of an objective function of binary variables (i.e. a boolean function such as a polynomial). A constant rate of background noise may be assumed. The translation step may be implemented on a classical processing system, for example the classical processing system **100** of the radar system described in **Fig. 2.**

The translation may include processing a cost function of the binary variables that favors geometrically relevant edge patterns. For example, the MHT problem may be translated into a Quadratic Unconstrained Binary Optimization (QUBO) or Polynomial Unconstrained Binary Optimization (PUBO). **S120** may comprise associating a binary variable with each edge of the graph (G) and processing a quadratic unconstrained binary cost function of the binary variables. The coefficient variables of said cost function may be such that: (a) coefficient variables of quadratic terms associated with binary variables of first and second edges such that the head vertex of the first edge coincides with the tail vertex of the second edge are values of a predetermined decreasing function of an angle formed between said first and second edges; (b) coefficient variables of quadratic terms associated with binary variables of first and second edges sharing a common tail vertex or a common head vertex are set as penalties; and (c) other coefficient variables are equal to zero.

Explicitly, the objective function of a QUBO is described as follows:

$$f(x) = \sum_{i,j=1}^{n} q_{ij} x_i x_j \ , \qquad x_i \in \{0,1\}, \ \ q_{ij} \in \mathbb{R}$$

The optimization problem is equivalent to finding the set of variables that minimizes the objective function such that:

$$x^* = argmin_{x \in \mathbb{B}^n} f(\mathrm{x})$$

As explained herein, the MHT may be formulated in a QUBO form. Based on the graph G= (V, E) defined above, the MHT's target may be formulated as finding an optimal subgraph G'= (V', E') which describes the most probable scenario. For that, a binary variable $e_{u,v}$ may be associated to each edge $(u, v) \in E$, $u, v \in V$. The binary variable may indicate if the associated edge is included in the solution subgraph or not.

The objective function can be built a sum of multiple energy terms between two or more of the binary variables. For example, the terms can be classified in two groups: (a) Kinematic energies $k_{u,v,w}$ between a pair of edges where the tail vertex of the first edge coincides with the head vertex of the second edge and (b) penalty energies - p - between a pair of edges which share a common tail vertex or a common head vertex.

The energy values may be computed beforehand for each term on a classical processing system. The kinematic energies may be computed using a decreasing function of an angle between a triplet of plots, u, v and w. For example, the kinematic energies may be computed as :

$$k_{v,u,w} = -\cos(\theta_{v,u,w})$$

Where $\theta_{v,u,w}$ is the angle between a triplet of plots u, v and w.

The penalty energy may be set as a constant with regard to the identity of the variables.

Overall, the following cost function may be obtained:

$$f(x) = \sum_{u \in V} ( \sum_{v,w:(v,u),(u,w) \in E} k_{v,u,w} * e_{v,u} e_{u,w} + \sum_{v,w:(v,u),(w,u) \in E} p * e_{v,u} e_{w,u}$$

$$+ \sum_{v,w:(u,v),(u,w) \in E} p * e_{u,v} e_{u,w})$$

In a further step, the objective function in the QUBO form may be mapped to Ising model Hamiltonian form by using the assignment:

$$x_i \rightarrow \frac{1 - Z_i}{2}$$

Where $Z_i = + 1$.

In a further step **S130,** the objective function mapped to Ising model Hamiltonian form may be minimized using a quantum algorithm implemented on a quantum processing system, for example the quantum processing system **110** of the radar system described in **Fig. 2.** State of the art quantum algorithms have been developed to facilitate the determination of the ground state of Hamiltonian. By mapping the MHT problem into a QUBO format which can be solved by finding the ground state (lowest eigenvalue) of the Hamiltonian representing the QUBO cost function, it is therefore possible to facilitate the solving of the MHT problem by using a quantum computer. Note that access to the quantum system used for the optimization, and access to the method for optimizing the quantum cost function may be provided through the internet for example, and an interface may be provided so that this routine is accessed in the cloud. The quantum algorithm may be the QAOA or a VQE algorithm. In other words, the applicant has found that by representing a batch of scans from a sensing system by a graph where the graph vertices are the sensed plots of the batch and the edges are segments between plots associated with successive sensing times, it is possible to translate the MHT problem into optimizing a cost function of binary variables where the binary variables are associated with the graph edges. The cost function can be a QUBO cost function or more generally a polynomial cost function PUBO of the binary variables. In particular, the cost function can be represented by a Hamiltonian operator (i.e. an Hermitian matrix) and the optimizing of the cost function can be performed by finding the ground state of said Hamiltonian (i.e. the lowest eigenvalue of the Hermitian matrix). Finding the lowest eigenvalue of the Hermitian matrix associated with the cost function of the MHT problem is facilitated by the use of a quantum algorithm. More details related to general mapping of functions to diagonal Hamiltonians acting on qubits may be found in "*On representation of Boolean and real functions as Hamiltonians for quantum computing"* by Stuart Hadfield.

In other words, the method proposed may comprise constructing a Hamiltonian encoding the solutions of the cost function in its eigenvalues and determining the lowest eigenvalue(s) of said Hamiltonian using a quantum algorithm. For example, the QAOA algorithm or the VQE algorithm can be used to find the lowest eigenvalue(s) of the Hamiltonian representing a polynomial or QUBO cost function. The optimized solutions of the Hamiltonian may then be transmitted by the quantum processing system to the classical processing system.

In a further step **S140,** a track may be defined between plots of successive scans belonging to an edge associated with a binary variable solving said minimization. This step may be performed on a classical processing system. The one or more tracks defined may further be presented to a user for example using a display utility. In some embodiments, tracks may be defined using a predetermined number of the lowest eigenstates provided by the quantum algorithm.

In a further step (not shown) a tracking method may comprise connecting tracks defined in solving the quadratic unconstrained binary cost functions of said batch and of a preceding batch by using a sliding routine to merge the tracks defined in said batches.

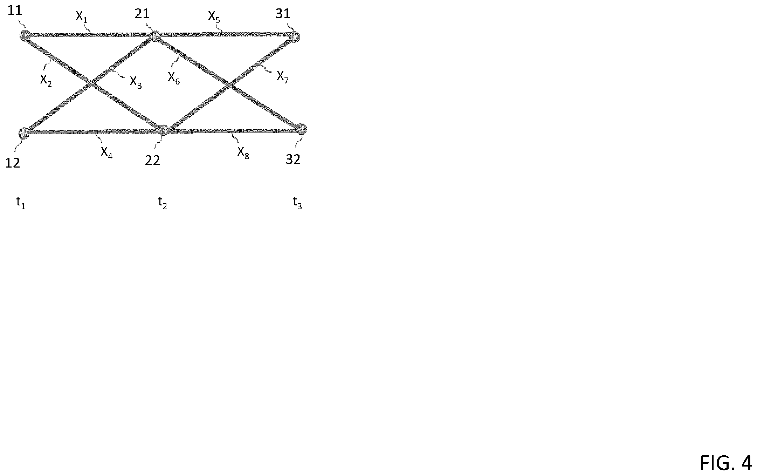

**Fig. 4** illustrates schematically a batch of scans obtained at time **ti, t$_2$, t$_3$** including two sensed plots per scan (two targets). The graph associated with this batch comprises 6 vertex referenced **11, 12, 21, 22, 31, 32** and 8 edges (qubits) between consecutives scans which are associated to 8 binary variables **Xi-Xs.** Considering the kinematic function defined in the example of **Fig. 3,** the QUBO cost function is expressed as follows:

$$f(x) = X_1 \cdot X_5 \cdot \cos(X_1, X_5) + X_1 \cdot X_6 \cdot \cos(X_1, X_6) + X_2 \cdot X_7 \cdot \cos(X_2, X_7) +$$

$$X_2 \cdot X_8 \cdot \cos(X_2, X_8) + X_4 \cdot X_8 \cdot \cos(X_4, X_8) + X_3 \cdot X_5 \cdot \cos(X_3, X_5) + X_3 \cdot X_6 \cdot$$

$$\cos(X_3, X_6) + X_1 \cdot X_2 \cdot P + X_3 \cdot X_4 \cdot P + X_1 \cdot X_3 \cdot P + X_2 \cdot X_4 \cdot P + X_5 \cdot X_6 \cdot P + X_7 \cdot X_8 \cdot$$

$$P + X_5 \cdot X_7 \cdot P + X_6 \cdot X_8 \cdot P$$

Where P is a penalty, P>0 and $X_i$ is a binary variable where $X_i = 0$ means that the edge associated to the binary variable is not part of a track and $X_i=1$ means that the edge is part of a track. The solution (ground state, minimum energy / cost) for this system is: $X_1 = 1$, $X_2 = 0$, $X_3 = 0$, $X_4 = 1$, $X_5 = 1$, $X_6 = 0$, $X_7 = 0$, $X_8 = 1$.

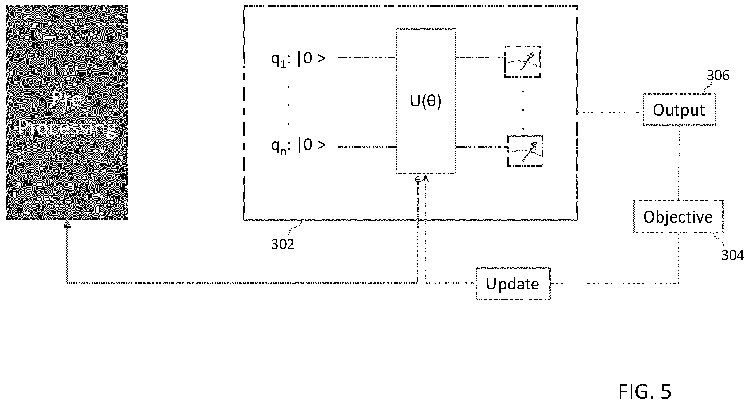

**FIG. 5** illustrates an example variational circuit prepared on a quantum processing system that may be used for approximating a ground state of a Hamiltonian representing a cost function. In a quantum computer, depending on the state of the function, different candidate solutions may be obtained when a sample is measured from this superposition. In the state-of-the-art for binary optimization QUBO problem, to approximate solutions to such a problem on a quantum computer, a variational circuit is used, prepared on a quantum computer, and measured to get possible candidate solutions. A variational circuit is also known as parameterized quantum circuits and is a family of hybrid quantum-classical algorithm. The variational circuit is based on the specific problem to be solved and on the variational algorithm selected to solve the problem as illustrated by the link between the pre-processing module and the circuit in Figure 5. The core of the algorithm is a parameterized quantum circuit which depends on a set of circuit parameters θ as denoted by block **302.** Also, an objective function as denoted by block **304** defines a scalar score for a set of parameters. An output from the quantum circuit as denoted by block **306** generates the results from this variational circuit. The goal is to optimize or train the circuit with respect to the objective. The circuit has a learning algorithm and an objective function with respect to which, the parameterized unitary is trained. Typically, a variational circuit is trained by a classical optimization algorithm that makes queries to the quantum device. The optimization is usually an iterative scheme that obtains better candidates for the parameters θ in a step, starting with either random or pre-trained initial parameters. In these embodiments, the samples may be denoted by:

$$x_k(\theta), \qquad k = 1, \ldots, K$$

where θ denotes the parameters of the variational circuit, and K is the number of shots measured at the real hardware for the iteration. The variational parameters optimize the parameter θ using the classical solver to optimize the probability of measuring the candidate solution and thus minimize the objective. In this way, an optimal sample is used as a solution to the problem. The variational form (i.e. VQE or QAOA) may depend on the problem itself, which might lead to better convergence properties.

Aspects of the present invention are described herein with reference to flowchart illustrations and/or block diagrams of methods, apparatus (systems), and computer program products according to embodiments of the invention. It can be understood that one or more blocks of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the present invention. In this regard, one or more blocks in the flowchart or block diagrams can represent a module, segment, or portion of instructions, which comprises one or more executable instructions for implementing the specified logical function(s). In some alternative implementations, the functions noted in the blocks can occur out of the order noted in the figures. For example, two blocks shown in succession can, in fact, be executed substantially concurrently, or the blocks can sometimes be executed in the reverse order, depending upon the functionality involved. It can also be noted that one or more block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art can recognize that this disclosure also can or can be implemented in combination with other program modules. Generally, program modules include routines, programs, components, data structures, etc. that perform particular tasks and/or implement abstract data types. Moreover, those skilled in the art can appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments where tasks are performed by remote processing devices that are linked through a communications network. However, some, if not many aspects of this disclosure can be practiced on stand-alone computers. In a distributed computing environment, program modules can be located in both local and remote memory storage devices.

As used in this application, the terms "component," "system," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a server computing system.

As it is employed in the subject specification, the term "processor" or "processing system" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, to optimize space usage or enhance performance of user equipment. A processor can also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random-access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A hybrid quantum/classical computer implemented method useful in tracking one or more targets in a field of view comprising:

    (a) receiving positioning data from a sensing system scanning a field of view containing one or more targets over successive sensing times ($t_0$, ...$t_k$) thereby collecting over time a batch ($B_k$) of scans ($S_1$,...,$S_k$) of sensed plots;
    (b) for a current batch ($B_k$) of scans ($S_1$,...,$S_k$) of sensed plots:

**i)** processing a graph (G) containing said sensed plots as vertices (V) and possible connections between pairs of plots associated with consecutive scans as edges (E);
**ii)** associating a binary variable to each edge of the graph (G);
**iii)** processing a cost function of the binary variables so as to favor geometrically relevant edge patterns for the targets being tracked;
**iv)** optimizing said cost function using a quantum processing system by determining the ground state of a Hamiltonian encoding the solutions of said cost function in its eigenvalues;
**v)** processing one or more tracks between plots of successive scans when said plots belong to an edge associated with a binary variable solving said optimization.

2. The method according to claim 1, wherein the step of optimizing the cost function by determining the ground state of a Hamiltonian includes repeatedly running a variational circuit approximating the ground state of the Hamiltonian representing said cost function.

3. The method according to claim 2, wherein the variational quantum algorithm is the Variational Quantum Eigensolver (VQE) or the Quantum Approximation Optimization Algorithm (QAOA).

4. The method according to any of the preceding claims, further comprising connecting tracks defined in optimizing the cost functions of the current batch and of a preceding batch by using a sliding routine.

5. The method according to any of the preceding claims, wherein the positioning data comprises ranging data derived from a sensing system such as a radar, a lidar, a sonar, a camera, or other sensors.

6. The method according to any of the preceding claims, wherein the graph (G) further contains possible connections between pairs of plots associated with successive scans which are non-consecutive.

7. The method according to any of claims, wherein processing of the graph further comprises defining for each edge a tail vertex belonging to a given scan and a head vertex belonging to a subsequent scan and wherein the cost function is defined as a quadratic unconstrained binary cost function of the binary variables, wherein:

   ● coefficient variables of quadratic terms associated with binary variables of first and second edges such that the head vertex of the first edge coincides with the tail vertex of the second edge are a predetermined decreasing function of an angle formed between said first and second edges;
   ● coefficient variables of quadratic terms associated with binary variables of first and second edges sharing a common tail vertex or a common head vertex are set as penalties;

8. The method according to claim 7, wherein optimizing said quadratic unconstrained binary cost function comprises:

   ● constructing a Hamiltonian encoding the quadratic unconstrained binary cost function in eigenvalues of said Hamiltonian by mapping the binary variables onto eigenvalues of Pauli X matrix and convert it to Pauli Z matrix;
   ● determining at least one of the lowest energy eigenstate of said Hamiltonian using a quantum algorithm.

9. The method according to any of claims 7 to 8, wherein said predetermined decreasing function F of the angle formed between said first and second edges is defined as a cosinus function $F(\theta) = -\cos(\theta)$.

10. The method according to any of claims 7 to 8, wherein said predetermined decreasing function F of the angle formed between said first and second edges is defined as a Heaviside step function $F(\theta) = 1, \theta < 90°$ and $-1, \theta \geq 90°$.

11. The method according to any of claims 7 to 8, wherein said predetermined decreasing function F of the angle formed between said first and second edges is defined as a rectangular function, a sign function or a trigonometric function.

12. A system useful for tracking one or more targets in a field of view comprising a classical computing system coupled to a quantum computing system, wherein

   **(a)** the classical processing system is configured for:

   **i)** receiving from a sensing system data indicative of a position of one or more targets within a field of view of said sensing system over successive sensing times ($t_0$, ...$t_k$) thereby collecting a current batch ($B_k$) of

scans ($S_1$,...,$S_k$) of sensed plots;
**ii)** for said current batch ($B_k$) of scans ($S_1$,...,$S_k$) of sensed plots:

1. processing a graph (G) containing said sensed plots as vertices (V) and possible connections between pairs of plots associated with consecutive scans as edges (E);
2. associating a binary variable to each edge of the graph (G);
3. processing a cost function of the binary variables so as to favor geometrically relevant edge patterns;
4. computing a Hamiltonian encoding the cost function values in eigenvalues of said Hamiltonian; and

**(b)** the quantum processing system is configured for determining the ground state of the Hamiltonian by implementing a quantum algorithm;
the classical computing system being further configured for processing one or more tracks between plots of successive scans when said plots belong to an edge associated with a binary variable belonging to the eigenstate associated with said at least one lowest eigenvalue.

13. The system according to claim 12, further configured for connecting tracks defined in optimizing the cost functions of the current batch and of a preceding batch by using a sliding routine.

14. The system according to any of claims 12 to 13, further comprising the sensing system.

15. A computer program product facilitating tracking of one or more targets in a field of view of a sensing system comprising computer readable storage medium having program instructions embodied therewith, the program instructions executable by a classical processing system and a quantum processing system coupled therewith to:

**(a)** receive, using the classical computing system, positioning data and or not doppler data from a sensing system scanning a field of view containing one or more targets over successive sensing times ($t_0$, ...$t_k$) thereby collecting over time a batch ($B_k$) of scans ($S_1$,...,$S_k$) of sensed plots;
**(b)** using the classical computing system, for a current batch ($B_k$) of scans ($S_1$,...,$S_k$) of sensed plots:

**i)** processing a graph (G) containing said sensed plots as vertices (V) and possible connections between pairs of plots associated with consecutive scans as edges (E);
**ii)** associating a binary variable to each edge of the graph (G);
**iii)** processing a cost function of the binary variables so as to favor geometrically relevant edge patterns;

**(c)** using the quantum computing system, implementing a variational quantum circuit for optimizing said cost function by determining the ground state of a Hamiltonian encoding the solutions of said cost function in its eigenvalues;
**(d)** using the classical processing system, processing one or more tracks between plots of successive scans when said plots belong to an edge associated with a binary variable solving said optimization.

FIG. 1

FIG. 2

FIG. 3

Receiving iteratively scan batches — S100

Pre-processing — S110

QUBO/PUBO cost function translation — S120

Quantum algorithm processing — S130

Converting the solution to tracks — S140

FIG. 4

FIG. 5

Europäisches Patentamt

European Patent Office

Office européen des brevets

## EUROPEAN SEARCH REPORT

Application Number

EP 23 15 1451

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG YI'AN ET AL: "Distributed multi-UAV cooperation for dynamic target tracking optimized by an SAQPSO algorithm", ISA TRANSACTIONS, INSTRUMENT SOCIETY OF AMERICA. PITTSBURGH, US, vol. 129, 20 December 2021 (2021-12-20), pages 230-242, XP087195314, ISSN: 0019-0578, DOI: 10.1016/J.ISATRA.2021.12.014 [retrieved on 2021-12-20] * abstract * * figures 2, 3 * * secrtions 1,1, 2,3, 3,1, 3,2, 5, 6 * | 1-15 | INV. G06N10/60 |
| X | TIMOTHY M MCCORMICK ET AL: "Implementation of a Multiple Target Tracking Filter on an Adiabatic Quantum Computer", ARXIV.ORG, CORNELL UNIVERSITY LIBRARY, 201 OLIN LIBRARY CORNELL UNIVERSITY ITHACA, NY 14853, 15 October 2021 (2021-10-15), XP091076829, * abstract * * sections 2, 3, 8 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 25 May 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

**Non-patent literature cited in the description**

- **SAMUEL S. BLACKMAN.** Multiple Hypothesis Tracking for Multiple Target Tracking. IEEE A&E Systems Magazine, January 2004, vol. 19, 5-18